# EUROPEAN PATENT SPECIFICATION

(11) **EP 0 341 054 B1**
(45) Date of publication and mention of the grant of the patent: **03.03.1993**
(21) Application number: 89304485.9
(22) Date of filing: 04.05.1989
(51) Int. Cl.: C09D 11/02, C09B 67/00

(54) **Process for preparing inks**
Verfahren zur Herstellung von Tinte
Procédé de préparation d'encre

(30) Priority: 05.05.1988 US 190569
(43) Date of publication of application: 08.11.1989
(73) Proprietor: SUN CHEMICAL CORPORATION, Fort Lee New Jersey 07026 (US)
(72) Inventor: Dien, Chi K., Livingston New Jersey (US); Carlick, Daniel J., Livingston New Jersey (US)
(74) Representative: Lawrence, Peter Robin Broughton

(56) References cited:
- DE-A- 2 921 238
- US-A- 4 747 882

## Description

The present invention relates to a process for the preparation of a printing ink by flushing a pigment slurry directly into an ink vehicle comprising an organic solution of metal resinates. The process is particularly intended for the production of gravure printing inks.

When preparing commercial printing inks, pigments are utilized in a variety of forms. Previously, dry pigments were used exclusively, and they are still being used for formulating certain printing inks such as those used for gravure printing. Dry pigments are generally prepared by filtering the pigment from a water or solvent medium followed by washing, drying and pulverizing to obtain the dry pigment in the desired finely divided or powdered form. Such finely divided or powdered dry pigments are, however, somewhat difficult to redisperse in printing ink vehicles.

Although wet presscakes or water dispersions have been used commercially in the manufacture of printing inks, such feed materials are limited to aqueous systems. The so-called "flushing" procedure has been used extensively for many years. In general, flushed pigments are made by transferring pigment particles from wet presscakes or from an aqueous phase to an organic vehicle such as a non-polar oil or resin phase. Although the flushing has the advantage of avoiding the costly and time-consuming drying operations necesary for the preparation of dry pigments, it has the drawbacks of still requiring special filtration and mixing equipment as well as overcoming the problems attendant upon the use of such equipment.

Recently issued U.S. Patent No. 4,634,471 discloses admixing an aqueous pigment slurry with an emulsion containing water, an emulsifying agent and an organic liquid selected from organic resins, organic solvents and mixtures thereof, followed by flushing the admixture thus formed with a hydrophobic organic vehicle. However, after the mixing step and prior to flushing, the admixture must be treated in a "concentration zone" that is preferably a filter such as a plate and frame filter press. Thus, this patented process requires a special filtration step to remove water.

There also have been proposals for preparing offset inks by directly converting the pigment from an aqueous slurry to a finished ink. However, such a process requires a high shear, high horsepower mixer as well as other special equipment.

At the present time, flushed pigments are not available for gravure printing inks, and therefore dry pigments are still being used. By gravure printing, for the purposes of this invention, it is meant photogravure publication printing. It is customary in gravure printing inks to use metal resinates as the varnish component. These metal resinates behave as emulsifiers during conventional flushing, and consequently this makes the necessary water separation step very difficult, if not impractical for commercial operations.

In accordance with the present invention, it has now been found that a novel and direct flushing procedure can be effectively used to make inks suitable for gravure printing. More specifically, it was found that such printing inks can be made directly from an aqueous pigment slurry by flushing with a metal resinate solution containing a controlled amount of solvent. The solvent to metal resinates weight ratio must be at least 40:60. Moreover, it has been found essential to have a minor of a fatty acid amine or fatty acid quaternary ammonium salt present to aid in the flushing treatment.

A new process according to the present invention comprises admixing an aqueous slurry of a pigment with a metal resinate and is characterised in that said metal resinates contain at least one metal selected from the group consisting of calcium, zinc, magnesium, and mixtures thereof, the resinate is present as a solution in an organic solvent and the resulting admixture has a solvent to metal resinate weight ratio of at least 40:60 and contains 2-30%, based on pigment content, of a C₈₋₂₄ -fatty acid amine or -fatty acid quaternary ammonium salt, the resulting admixture is agitated in a mixer for a time sufficient to form large pigment beads, the beads are separated from at least most of the surrounding aqueous phase, and residual water is removed from the separated non-aqueous phase by azeotropic distillation.

By operating the process of this invention, not only is a highly desirable gravure printing ink obtained but considerable savings are realized because the conventional filtration, drying and grinding procedures are eliminated. Moreover, the present process can be carried out in an ordinary reactor or tank provided with a low-energy agitator rather than the expensive and special high-energy equipment disclosed in the prior art.

In the practice of the present invention, the starting materials include an aqueous slurry of the pigment, an organic solvent solution of metal resinates, and a fatty acid amine or fatty acid quaternary ammonium salt. The latter may be added to the system, either initially, e.g. in the aqueous slurry, as well as during or intermediate of the various processing steps.

All of the conventional pigments useful in printing inks may be employed in the present process, and the use of a special pigment does not constitute a feature of the invention. Illustrative pigments include Pigment Yellow 12 (green shade and red shade), Pigment Red 49=1, Pigment Red 57=1.

The pigment slurry is formed by diazotization or tetrazotization of an aromatic amine in acid and water with sodium nitrate; the diazonium or tetrazonium salt is introduced into an aqueous coupling component to form the color. In the case of Red 49=1 and Red 57=1 metallization is necessary to form the final insoluble pigment. These pigment slurries are prepared for conventional processing well known by the skilled artisan. In general, the aqueous slurry will contain from about 2 to 10% by weight of pigment with the remainder being water and inorganic salts. As indicated above, the slurry may optionally contain a minor amount of fatty acid amine, which acts as a flushing aid.

The solution of metal resinates is formed merely by admixing the metal resinates with an organic solvent. Metal substituents of the resinates are selected from the group consisting of calcium, zinc, magnesium and admixtures thereof. The particular metal(s) used does not constitute a critical feature. It is possible to employ commercially available varnishes such as St. John's MR-522, MR-509 and MR-516; as well as Union Camp's Unirex 1061, 1062 and 1059. These varnishes are known to be composed of metal or mixed metal resinates. It will be understood, however, that the metal resinates may also be specially prepared for use in the present process.

Various organic solvents may be employed to form the solution of metal resinates. Again, the choice of a particular solvent does not pertain to essence of the invention. Although many solvents are available, some of the preferred solvents include toluene and lactol spirits; the latter being a commercial name for aliphatic hydrocarbon solvents with a boiling point range at 97-107°C.

What is essential in the present invention is that the weight ration of solvent to metal resinates should be 40:60 or higher. More particularly, it was found that this ratio must be at least 40:60 in order for the flushing procedure to be effectively employed to prepared gravure printing inks with vehicles containing metal resinates. It is so important to maintain this ratio that extra solvent such as toluene or lactol spirits may be added during processing.

Another essential feature of the invention is the use of a fatty acid amine or fatty acid quaternary ammonium salt in the system as an aid to flushing. Without the fatty acid amine, the described product will not be obtained. As previously noted, this additive may be added initially and/or during processing. In the process the fatty acid or quaternary ammonium salt amine will contain at least 8 carbon atoms and up to 24 carbon atoms per molecule. Ready commercial availability is the primary limitation. In general, only minor amounts of the fatty acid amines need be used, i.e., sufficient in amount to aid in the flushing operations. Amounts ranging from 2 to 30% based on pigment content are used, preferably 5 to 10%. Illustrative fatty acid amines include such commercially available materials as Duomeen T, Triamine T and Kemamine Q-6502C manufactured by Arzo Chemical America and Humko Chemical. Duomeen T is N-tallow-1,3-diaminopropane; while Triamine T is N-tallow-3,3′-diamino bispropylamine. Other useful fatty acid amines include, but are not limited to, the following:
Duomeen C (N-coco-1,3-diamino propane)
Duomeen O (N-oleyl-1,3-diamino propane)
Triamine C (N-coco-1,3′-diamino propane)
Dimethyl dicoco ammonium chloride
Dimethyl dioctyl ammonium chloride
Dimethyl dilauryl ammonium chloride

In general, the flushing procedure will be carried out at temperatures ranging from 5 to 95°C, preferably from 20 to 50°C, and at a pH ranging from 4 to 10, preferably 5 to 8.

After combining the aqueous slurry with the organic solvent solution of metal resinates, the resulting admixture is subjected to agitation. Prior to agitation or during the initial stage of agitation, the admixture may be adjusted to ensure that the proper ratio of solvent to metal resinates exists, that sufficient fatty acid amine is present, and that the pH is within the prescribed range. It is possible, for example, to add the fatty acid amine or the quaternary ammonium salt and extra solvent after a short period of agitation. Any pH adjustment required can be made at the same time.

Agitation may be carried out effectively in a convention reactor or tank provided with low-speed agitators. Most conventional agitators, which give an effective mixing, can be used here. For instance, a simple blade paddle-type agitator or a 2 to 4 blades impeller agitator or a turbine propeller type agitator will also give satisfactory results. Relatively slow speeds at 20-500 rpm are sufficient for this operation. High speed agitators can also be used but they are not essential for the present purposes.

Agitation is carried out for a period of time sufficient to produce the desired size of the pigment beads, usually from 1 to 5mm. For most purposes, the required agitation will be completed within a time period ranging from 0.25 to 3 hours, and preferably from 0.5 to 1 hour. It will be understood, however, that the exact agitation time period is not critical and that the bead size can vary widely. The temperature during agitation is preferably in the range 5 to 95°C, most preferably in the range 10 to 70°C. When carrying out the process of the present invention under its controlled conditions, the pigments are transferred smoothly from the slurry into the varnish or organic solvent solution of metal resinates. Initially, there are small sand-like particles, which grow to larger beads with agitation and eventually to a big lump. In general, agitation is stopped when large bead sizes are formed, which facilitates the separation of the bulk of the water therefrom by physical means. Bulk water can be removed simply by decanting or siphoning. Generally it is unnecessary and undesirable to use physical separation means such as filtration or the type of concentration zone described in the prior art.

The remaining material is then transferred to a mixer. The mixing action pushes the beads together to form large soft lumps or magma and squeezes out more water that can be separated from the magma. It is washed with water until the conductivity of the wash water is 0.05-0.06 (0.0525-0.063) or less milli mhos/cm (mS/cm). This ensures that all the inorganic salts and water soluble organic materials formed in the pigment preparation process are removed from the final ink. Multiple batches of water may be used to ensure adequate washing. The mixer is provided with low-speed mixing means such as (describe equipment, agitators, rpm, etc.). A Baker-Perkins double arm mixer, Nauta mixer or any other mixer that can handle paste material and have heating and vacuum systems to remove the residual water can be used in this operation.

The washed material is then heated to a temperature of from about 50 to 110°C, preferably 80 to 90°C, under vacuum to effect azeotropic distillation. Preferably the distillation equipment is arranged to separate water from the azeotropic mixture while permitting recycling of the organic solvent to the mixer. The flexibility of the present process permits additional metal resinates solution in the organic solvent to be added following the washing step and/or while mixing the material during heat up to the distillation temperatures.

Another aspect of the invention involves raising the temperature somewhat at the end of distillation, i.e., up to about 100°C, to remove crystalline water from the pigment molecules.

The product mixture, following azeotropic distillation, is cooled in the mixer to ambient temperatures. If necessary, more metal resinates, organic solvent, or other ink additives may be added. Product obtained from the ink is referred to herein as base ink and will generally have a pigment content of from about 20 to 25% by weight, containing less than 1% by weight of moisture.

The base inks have higher pigment content than that required in final gravure inks. They are heavy but pumpable dispersions. At the present time, base inks are made from dry pigment by grinding with varnish and solvent. They are generally made at a centralized location and shipped to various locations for conversion into the final printing inks. The commercial gravure printing inks have many different formulations, depending upon the type of color, type of paper, and quality of print, etc. to satisfy various printing requirements. They are generally made, using simple stirring equipment, from base ink with additional varnish, solvent, clay, wax, and other ink additives. If desired, the final gravure inks can be made directly from the mass in the mixer by adding more varnish, solvent, and other ink ingredients and bypass the base ink separations.

The invention will be more fully understood by reference to the following specific embodiments:

### EXAMPLE 1

To a 14,500 mls slurry of Pigment Yellow 12, which contained 585 gms color and 65 gms Duomeen, had a pH of 5.9, was added a solution formed from 864 gms of St. John's MR-522 varnish in 60 mls (52 gms) toluene, equivalent to 518 gms calcium and zinc resinates in 398 gms toluene.

The resulting admixture was agitated for 5 minutes, followed by the addition of another 26 gms toluene while agitating. Agitation was continued for a total of 1 hour, utilizing a conventional laboratory stirrer. A four-blade propeller stirrer is used although, a homemade two-blade paddle stirrer can also be used successfully. Pigment beads started to form within 10-15 minutes following addition of the extra toluene, and the beads rapidly settled at the bottom of the reactor vessel once agitation ceased. The clear water solution at the top of the vessel was decanted, while the remaining material, substantially comprising heavy pigment beads and residual water, was transferred to a Sigma blade double arm mixer for washing and water removal.

The material in the mixer was washed with 1,200 mls of water four times, until the conductivity of the wash water was 0.05-0.06 (0.0525-0.063) or less mill mhos/cm (mS′/cm). A solution of 262 gms St. John's MR-522 varnish and 100 mls of toluene was added slowly. Mixing was carried out for 30 minutes, and a solution of 224 gms of St. John's MR-522 and 224 mls of toluene was added. Mixing was continued for 1-2 hours to form a homogeneous mixture, which was heated to 80-90°C under vacuum using condensation equipment on the mixer so that water was separated from the azeotropic mixture while returning or recycling the toluene to the mixer. Distillation was stopped when water separation from azeotropic mixture slowed down. Approximately 100 mls of water was distilled off. The ratio of toluene to metal resinates was at least or greater than 40:60.

Additional varnish, solvent and other additions could be added to the thus-treated material, after cooling, to give a total of 2,600 gms of base ink; provided that the final ratio of toluene to metal resinates was at least 40:60.

The resulting base ink was converted to gravure printing ink in accordance with the following formulations:

### (A) Yellow ink for coated paper

65 parts St. John's MR-522 varnish
27 parts this yellow base ink
6.5 parts Ethyl hydroxyethyl cellulose dispersion
1.5 parts Wax dispersion

This ink is made in simpler agitation equipment and diluted with 100 ml solvent to a viscosity of 18 second in No. 2 shell cup before application.

### (B) Yellow ink for uncoated paper

9 parts St. John's MR-522 varnish
27.5 parts this yellow base ink
24.5 parts Clay base
30.5 parts Ethyl hydroxyethyl cellulose dispersion
7.2 parts Polyamide varnish

This ink is also made by agitation and diluted with 50 ml solvent to 18 second viscosity in No. 2 shell cup before application.

When the gravure printing ink was tested, it was at least equivalent in performance to conventional gravure printing ink prepared from dry pigment.

### EXAMPLE 2

Example 1 was repeated, except without the addition of Duomeen T, and utilizing St. John's MR-522 varnish (i.e., the toluene to metal resinate ratio was 40:60) without the addition of extra toluene. No pigment bead formation occurred; nor was there any sign of flushing after 2 hours of agitation.

### EXAMPLE 3

A slurry of 14,400 gms of Pigment Red 49=1 (Lithol Red) containing 540 gms of pigment was adjusted to 6.0 pH with acetic acid. A solution of 720 gms of St. John's MR-522 varnish containing 60% metal resinates and 150 mls toluene was added to the red pigment slurry. After being agitated for 5 minutes in the same equipment employed in Example 1, another 30 mls of tolene were added. An emulsion of 27 gms Duomeen T in 270 mls of water at 55°C was added after agitating for 10 minutes. The pH was then readjusted to 6.0 pH with acetic acid.

Pigment beads formed slowly and grew larger with agitation. The resulting mixture was agitated for a total of 90 minutes. Water was then siphoned off. The remaining material was washed followed by removal of residual water by distillation as in Example 1. The product thus obtained was converted to a base ink also as in Example 1. A total 2,250 gms base ink with a pigment content of 24% was obtained. When tested, this product compared favorably in performance with a base ink of Lithol Red containing 26% dry pigment.

This base ink can be converted to gravure ink in accordance with the following formulations:

### (A) Red ink for coated paper

55.2 parts St. John's MR-522 varnish
37.8 parts this red base ink
6.0 parts Wax dispersion

### (B) Red ink for uncoated paper

44 parts St. John's MR-522 varnish
49 parts this red base ink
4 parts Clay base
2 parts solvent
1 part Ethyl hydroxyethyl cellulose dispersion

Both inks are made in simple agitation equipment and diluted with 60 ml solvent to 18 second viscosity in No. 2 shell cup before application.

### COMPARATIVE EXAMPLE 4

The run of Example 3 was repeated except that no Duomeen T was added. Neither bead formation nor flushing occurred after 3 hours of agitation.

### EXAMPLE 5

The run of Example 3 was repeated except that 25 gms of Triamine T were substituted for the Duomeen T. Bead formation occurred, and a similar base ink was made directly from the slurry as in Example 3.

### EXAMPLE 6

A slurry of Pigment Red 57-1 (Lithol Rubine) containing 400 gms of pigment and 25 gms of Duomeen T was converted directly to a base ink using the procedure of Example 1. The final temperature in the mixer's jacket was allowed to reach 100°C near the end of azeotropic distillation in order to remove crystalline water in the pigment molecule. The final ink was comparable to such an ink made from dry pigment.

### EXAMPLE 7

The run of Example 1 was repeated except that instead of St. John's MR-522 varnish Union Camp Corp.'s Unirez 1061 varnish containing calcium, zinc and magnesium resinates was used. Pigment in the slurry was directly converted to a base ink, which was comparable to base ink made from dry pigment.

### EXAMPLE 8

Example 1 was repeated except that St. John's MR-522 varnish was replaced by a lactol spirit-based varnish, namely St. John's MR-509 varnish. Lactol spirit was the solvent in the process. As in Example 1, a base ink was made directly from the slurry.

It will be understood that the invention as described and illustrated above is subject to variations and modifications without departing from its basic concepts. Thus, for example, it is possible to apply the process of this invention in the manufacture of offset printing inks as well as other ink vehicles.

## Claims

1. A process for preparation of base ink suitable for making printing inks comprising admixing an aqueous slurry of a pigment with a metal resinate characterised in that said metal resinates contain at least one metal selected From the group consisting of calcium, zinc, magnesium, and mixtures thereof, the resinate is present as a solution in an organic solvent and the resulting admixture has a solvent to metal resinate weight ratio of at least 40:60 and contains 2-30%, based on pigment content, of a C₈₋₂₄ -fatty acid amine or -fatty acid quaternary ammonium salt, the resulting admixture is agitated in a mixer for a time sufficient to form large pigment beads, the beads are separated from at least most of the surrounding aqueous phase, and residual water is removed from the separated non-aqueous phase by azeotropic distillation.

2. A process according to claim 1 in which the pH of the said resulting admixture is from 4 to 10, the agitation is conducted at 5 to 95°C, the agitation is stopped to permit the separation of the large beads, the separation of the beads from the water is by physical means other than filtration, and the azeotroped material is substantially Free of water and is cooled to ambient temperature and mixed with ink varnish or solvent or other ink additives to form the desired base ink.

3. A process according to claim 1 or claim 2 in which the base ink is for making a gravure printing ink.

4. A process according to any of claims 1 to 3 wherein the fatty acid amine is added to the aqueous pigment slurry.

5. A process according to any of claims 1 to 4 wherein the fatty acid amine is added to the admixture of the aqueous pigment and the organic solution of the metal resinates.

6. A process according to any preceding claim wherein additional solvent is added to said admixture substantially prior to the agitation, the solvent preferably being selected from toluene, lactol spirits, and other aromatic or aliphatic hydrocarbon solvents.

7. A process according to any preceding claim wherein the fatty acid amine is N-tallow-1,3-diaminopropane.

8. A process according to any preceding claim wherein the agitation is carried out for a time period ranging from 15 to 180 minutes.

9. A process according to claim 8 in which the agitation is carried out at a temperature ranged from 10 to 70°C.

10. A process according to any preceding claim in which the beads formed in the agitation are separated from the bulk aqueous phase, and are squeezed into a mass, water is separated from the mass by the squeezing and the squeezed mass is subjected to the azeotropic distillation.

11. A process according to claim 10 in which the squeezed mass is washed with water before the azeotropic distillation.

12. A process according to any preceding claim in which the material that has been subjected to azeotropic distillation is heated to a temperature sufFicient to remove crystalline water from the pigment molecules.

13. A process according to any preceding claim wherein the base ink is converted to a gravure printing ink by mixing with additional varnish, solvent and other ink additives.

## Patentansprüche

1. Verfahren zur Herstellung von Basistinte, die zur Herstellung von Drucktinten geeignet ist, bei dem eine wässrige Aufschlämmung eines Pigments mit einem Metall-Resinat vermischt wird, dadurch gekennzeichnet, daß die Metall-Resinate mindestens ein aus der aus Calcium, Zink, Magnesium und Gemischen davon bestehenden Gruppe ausgewähltes Metall enthalten, wobei das Resinat als Lösung in einem organischen Lösungsmittel vorliegt und das resultierende Gemisch ein Gewichtsverhältnis von Lösungsmittel zu Metall-Resinat von mindestens 40: 60 hat und 2 bis 30 %, bezogen auf den Pigmentgehalt, eines C₈₋₂₄-Fettsäureamins oder -Fettsäure-Quarternären-Ammonium-Salzes enthält, wobei das resultierende Gemisch in einem Kneter so lange gerührt wird bis sich große Pigmentperlen bilden, die Perlen von zumindest dem Hauptteil der umgebenden wässrigen Phase abgetrennt werden, und Restwasser aus der abgetrennten nichtwässrigen Phase durch azeotrope Destillaton entfernt wird.

2. Verfahren nach Anspruch 1, bei dem der pH des resultierenden Gemisches im Bereich von 4 bis 10 liegt, das Rühren bei 5 bis 95 °C durchgeführt wird, das Rühren beendet wird, um die Abtrennung der großen Perlen zu gestatten, die Abtrennung der Perlen vom Wasser durch andere physikalische Mittel als Filtration bewirkt wird, und das azeotropierte Material im wesentlichen wasserfrei ist und auf Umgebungstemperatur abgekühlt wird und mit Tintenfirnis oder Lösungsmittel oder anderen Tintenzusätzen unter Bildung der gewünschten Basistinte vermischt wird.

3. Verfahren nach Anspruch 1 oder Anspruch 2, bei dem die Basistinte zur Herstellung einer Tiefdrucktinte bestimmt ist.

4. Verfahren nach einem der Ansprüche 1 bis 3, bei dem das Fettsäureamin zur wässrigen Pigmentaufschlämmung gegeben wird.

5. Verfahren nach einem der Ansprüche 1 bis 4, bei dem das Fettsäureamin zu dem Gemisch aus dem wässrigen Pigment und der organischen Lösung der Metall-Resinate gegeben sind.

6. Verfahren nach einem der vorhergehenden Ansprüche, bei dem zusätzliches Lösungsmittel zu dem Gemisch gegeben wird, und zwar im wesentlichen vor dem Rühren, wobei das Lösungsmittel vorzugsweise ausgewählt ist aus Toluol, Lactol-Spriten und anderen aromatischen oder aliphatischen Kohlenwasserstoff-Lösungsmitteln.

7. Verfahren nach einem der vorhergehenden Ansprüche, bei dem es sich bei dem Fettsäureamin um N-Tallow-1,3-diaminopropan handelt.

8. Verfahren nach einem der vorhergehenden Ansprüche, bei dem das Rühren während eines Zeitraums im Bereich von 15 bis 180 Minuten durchgeführt wird.

9. Verfahren nach Anspruch 8, bei dem das Rühren bei einer Temperatur im Bereich von 10 bis 70°C durchgeführt wird.

10. Verfahren nach einem der vorhergehenden Ansprüche, bei dem die beim Rühren gebildeten Perlen vom Hauptteil der wässrigen Phase abgetrennt und zu einer Masse gepreßt werden, Wasser aus der Masse durch das Pressen abgetrennt wird und die ausgepreßte Masse der azeotropen Destillation unterzogen wird.

11. Verfahren nach Anspruch 10, bei dem die ausgepreßte Masse vor der azeotropen Destillation mit Wasser gewaschen wird.

12. Verfahren nach einem der vorhergehenden Ansprüche, bei dem das Material, das der azeotropen Destillation unterzogen wird, auf eine Temperatur erhitzt wird, die ausreichend ist, um Kristallwasser aus den Pigmentmolekülen zu entfernen.

13. Verfahren nach einem der vorhergehenden Ansprüche, bei dem die Basistinte durch Vermischen mit zusätzlichem Firnis, Lösungsmittel und anderen Tintenzusätzen in eine Tiefdrucktinte umgewandelt wird.

## Revendications

1. Procédé pour la préparation d'une encre de base convenant à la fabrication d'encres d'impression, comprenant le mélange d'une suspension aqueuse d'un pigment avec un résinate métallique, caractérisé en ce que lesdits résinates métalliques contiennent au moins un métal choisi dns le groupe composé du calcium, du zinc, du magnésium et de leurs mélanges, le résinate est présent sous forme d'une solution dans un solvant organique, et le mélange résultant a un rapport pondéral du solvant au résinate métallique d'au moins 40:60 et il contient 2 à 30%, sur la base de la teneur en pigment, d'une amine d'acide gras ou d'un sel ammonium quaternaire d'acide gras en C₈₋₂₄, le mélange résultant est agité dans un mélangeur pendant un temps suffisant pour former de grosses perles de pigment,les perles sont séparées d'au moins la plus grande partie de la phase aqueuse environnante, et l'eau résiduelle est éliminée de la phase non aqueuse séparée, par distillation azéotrope.

2. Procédé suivant la revendication 1, dans lequel le pH dudit mélange résultant est de 4 à 10, l'agitation est effectuée à une température de 5 à 95°C, l'agitation est arrêtée pour permettre la séparation des grosses perles, la séparation des perles et de l'eau est effectuée par des moyens physiques autres qu'une filtration, et lamatière azéotropée est sensiblement exempte d'eau et elle est refroidie à température ambiante et mélangée à un vernis d'encre ou un solvant ou d'autres additifs d'encre pour former l'encre de base désirée.

3. Procédé suivant la revendication 1 ou 2, dans lequel l'encre de base est destinée à la fabrication d'une encre d'impression pour gravure.

4. Procédé suivant l'une quelconque des revendications 1 à 3, dans lequel l'amine d'acide gras est ajoutée à la suspension aqueuse de pigment.

5. Procédé suivant l'une quelconque des revendications 1 à 4, dans lequel l'amine d'acide gras est ajoutée au mélange du pigment aqueux et de la solution organique des résinates métalliques.

6. Procédé suivant l'une quelconque des revendications précédentes, dans lequel du solvant supplémentaire est ajouté audit mélange sensiblement avant l'agitation, le solvant étant de préférence choisi parmi toluène, essences de lactol et autres solvants de type hydrocarbures aromatiques ou aliphatiques.

7. Procédé suivant l'une quelconque des revendications précédentes, dans lequel l'amine d'acide gras est N-suif-1,3-diaminopropane.

8. Procédé suivant l'une quelconque des revendications prcédentes, dans lequel l'agitation est effectuée pendant une durée comprise entre 15 et 180 minutes.

9. Procédé suivant la revendication 8, dans lequel l'agitation est effectuée à une température comprise entre 10 et 70°C.

10. Procédé suivant l'une quelconque des revendications précédentes, dans lequel les perles formées dans l'agitation sont séparées de la phase aqueuse principale et sont pressées en une masse, l'eau est éliminée de la masse par le pressage, et la masse pressée est soumise à la distillation azéotrope.

11. Procédé suivant la revendication 10, dans lequel la masse pressée est lavée avec de l'eau avant la distillation azéotrope.

12. Procédé suivant l'une quelconque des revendications précédentes dans lequel la matière qui a été soumise à la distillation azéotrope est chauffée à une température suffisante pour éliminer l'eau de cristallisation des molécules de pigment.

13. Procédé suivant l'une quelconque des revendications précédentes, dans lequel l'encre de base est convertie en une encre d'impression pour gravure, par mélange avec du vernis supplémentaire, du solvant et d'autres additifs d'encre.
